# NEUE EUROPÄISCHE PATENTSCHRIFT

(11) **EP 0 929 229 B2**
(45) Veröffentlichungstag und Bekanntmachung des Hinweises auf die Entscheidung über den Einspruch: **31.03.2004**
(45) Hinweis auf die Patenterteilung: 14.02.2001
(21) Anmeldenummer: 97936697.8
(22) Anmeldetag: 09.08.1997
(51) Int. Cl.: A23G 3/30

(54) **KAUGUMMI, ENTHALTEND EIN SÜSSUNGSMITTEL**
CHEWING GUM WITH SWEETENING AGENT
CHEWING-GUM CONTENANT UN EDULCORANT

(30) Priorität: 25.09.1996 DE 19639342
(43) Veröffentlichungstag der Anmeldung: 21.07.1999
(73) Patentinhaber: SÜDZUCKER AKTIENGESELLSCHAFT MANNHEIM/OCHSENFURT, 68165 Mannheim (DE)
(72) Erfinder: RAPP, Knut, M., D-67591 Offstein (DE); WILLIBALD-ETTLE, Ingrid, D-76829 Landau (DE)
(74) Vertreter: Schrell, Andreas, Dr.
(86) Internationale Anmeldenummer: PCT/EP1997/004345
(87) Internationale Veröffentlichungsnummer: WO 1998/012933

(56) Entgegenhaltungen:
- EP-A- 0 328 849
- EP-A- 0 625 578
- DE-A- 3 715 919

## Beschreibung

Die Erfindung, betrifft ein Kaugummi, enthaltend 1-O-α-D-Glucopyranosyl D-sorbit, insbesondere ein Süßungsmittelgemisch aus 6-O-α-D-Glucopyranosyl-D-sorbit, 1-O-α-D-Glucopyranosyl-D-sorbit und 1-O-α-D-Glucopyranosyl-D-mannit.

Süßungsmitteigemische, die die drei vorgenannten Substanzen enthalten, sind zur Verwendung in Karamellen, Erdbeer-Konfitüre und Speiseeis aus der EP 0 625 678 A bekannt.

Kaugummis enthalten gewöhnlich eine wasserunlösliche Kaugummigrundmasse und einen wasserlöslichen Anteil, der unter anderem für den Geschmack und die Süßkraft des Kaugummis verantwortlich ist. Für die Eigenschaften der Kaugummis, wie beispielsweise deren Lagerfähigkeit, Aromen- oder Wirkstofffreigabe, Aussehen, Oberflächenstruktur oder Textur ist der wasserlösliche Anteil, insbesondere das verwendete Süßungsmittel, von Bedeutung. Die Zusammensetzung des Süßungsmittels ist auch bei der möglichen Entstehung von Zahnkaries zu berücksichtigen. Zuckerhaltige Kaugummis begünstigen die Entstehung von Zahnkaries und sind zudem nicht Diabetiker-geeignet. Es wurden daher zuckerfreie oder zuckerreduzierte Kaugummis vorgeschlagen, die Zuckeralkohole wie Sorbit, Mannit oder Xylit enthalten. Die Anwesenheit dieser Zuckeralkohole führt jedoch zu Wasseraufnahme, so daß sich die Eigenschaften des Kaugummis unerwünscht ändern. Zur Überwindung dieses Problemes schlägt die EP-B1 0 328 849 die Verwendung eines Süßungsmittelgemisches aus nahezu äquimolaren Anteilen 6-O-α-D-Glucopyranosyl-D-sorbit (im folgenden kurz 1,6-GPS genannt) und 1-O-α-D-Glucopyranosyl-D-mannit (im folgenden kurz 1,1-GPM genannt) in Kaugummis vor.

Kaugummis müssen den unterschiedlichsten Anforderungen gerecht werden. Diese hängen stark von dem Verwendungszweck des Kaugummis, beispielsweise als Genußmittel oder als Träger pharmazeutisch aktiver Wirkstoffe, sowie vom subjektiven Geschmacksempfinden der Verbraucher ab. Aufgrund der Vielzahl der verschiedenen Anforderungen ist die Bereitstellung weiterer, verbesserter Kaugummizusammensetzungen wünschenswert. So neigen viele der im Stand der Technik bekannten zuckerfreien Kaugummis dazu, daß ihre als Süßungsmittel verwendeten Zuckeraustauschstoffe rekristallisieren und damit zu einer unerwünschten Textur beziehungsweise Oberfläche führen. Zudem weisen beispielsweise die das äquimolare nicht-hygroskopische Gemisch aus 1,6-GPS und 1,1-GPM enthaltenden Kaugummis zwar eine geringere Wasseraufnahme auf, benötigen aber vergleichsweise größere Mengen an Weichmachem, um eine akzeptable Struktur des Kaugummis zu gewährleisten.

Der vorliegenden Erfindung liegt daher das technische Problem zugrunde, ein verbessertes insbesondere ein zuckerfreies oder zuckerreduziertes Kaugummi bereitzustellen, das die vorgenannten Nachteile überwindet.

Die Lösung dieses technischen Problemes liegt in der Bereitstellung eines Kaugummis gemäß Hauptanspruch. 1,1-GPM kann wasserfrei und/oder als Dihydrat vorliegen. Kaugummis, die ein vorgenanntes Süßungsmittelgemisch enthalten, weisen überraschenderweise den Vorteil auf, daß das erfindungsgemäß eingesetzte Süßungsmittelgemisch einen weichmachenden Effekt auf die Struktur des Kaugummis ausübt und gleichzeitig ein Austrocknen des Kaugummis verhindert. Die erfindungsgemäßen Kaugummis weisen demgemäß eine verbesserte, insbesondere flexiblere Struktur auf und sind aufgrund ihrer nicht vorhandenen beziehungsweise geringen Hygroskopizität lange lagerfähig. Zudem ist das erfindungsgemäß eingesetzte Süßungsmittelgemisch leichter löslich als beispielsweise ein äquimolares Süßungsmittelgemisch aus 1,6-GPS und 1,1-GPM, so daß sich eine verbesserte beziehungsweise veränderte Aromen- und/oder Wirkstofffreigabe ergibt. Das eingesetzte Süßungsmittelgemisch ist besonders leicht löslich. Die mit dem Süßungsmittelgemisch hergestellten Kaugummis können besonders vorteilhafter Weise pharmazeutisch aktive Wirkstoffe kontinuierlich freisetzen. Die Verwendung von 1,1-GPS, insbesondere eines Süßungsmittelgemisches aus 1,6-GPS, 1,1-GPS und 1,1-GPM in einem Kaugummi führt demgemäß zu einer überraschenden und vorteilhaften Verbesserung der Aroma- und/oder Wirkstofffreigabe, sowie, aufgrund der weichmachenden Wirkung von 1,1-GPS und des Süßungsmittelgemisches zu einem Kaugummi mit verbesserten organoleptischen Eigenschaften und erhöhter Lagerfähigkeit.

Im Zusammenhang der vorliegenden Erfindung wird unter einem Kaugummi ein Nahrungs-, Genuß- oder Heilmittel verstanden, das eine eine verlängerte Verweilzeit im Mund- und Rachenraum ermöglichende Kaugrundmasse und aktive Bestandteile wie Geschmackstoffe, Nahrungs- oder Nahrungsergänzungsstoffe und/oder medizinische Wirkstoffe enthält.

Weitere vorteilhafte Ausführungsformen sind den Unteransprüchen zu entnehmen.

Insbesondere betrifft die Erfindung ein zuckerfreies Kaugummi der vorgenannten Zusammensetzung, das in vorteilhafter Weise akariogen und diabetiker-geeignet ist. Die Erfindung betrifft auch zukkerreduzierte Kaugummis, die das vorgenannte Süßungsmittelgemisch und zusätzlich eine gegenüber herkömmlichen zuckerhaltigen Kaugummis reduzierte Zuckermenge aufweisen.

Erfindungsgemäß ist vorgesehen, 1,1-GPS oder das genannte Süßungsmittelgemisch in den erfindungsgemäßen Kaugummis und zum als feste Trockensubstanz einzusetzen, in einer Menge von 30 bis 60 Gew.-%, bezogen auf das Gesamtgewicht des Kaugummis.

Erfindungsgemäß enthält das Kaugummi insbesondere ein Süßungsmittelgemisch aus 10 bis 50 Gew.-% 1,6-GPS, 2 bis 20 Gew.-% 1,1-GPS und 30 bis 70 Gew.-% 1,1-GPM, bezogen auf das Gewicht des Süßungsmitteigemisches.

Die in den erfindungsgemäßen Kaugummis einsetzbare Kaugummigrundmassse liegt innerhalb von 10 bis 75 Gew.-%, vorzugsweise des Gesamtgewichts des Kaugummis vor. Die Kaugummigrundmasse umfaßt üblicherweise Elastomere, Elastomer-Lösungsmittel, Weichmacher, Füllstoffe, Verdickungsmittel und/oder Trenn- und Gleitmittel.

Als synthetische Elastomere können Butadien-Styrolcopolymerisate, Polyolefine, insbesondere Polyethylen und Polyisobutylen, Isobutylen-Isopren-copolymerisate, langkettige Polyvinylester oder Polyvinyläther, Polyvinylisobutyläther, Polyvinylalkohol oder ähnliche verwendet werden. Als natürliche Elastomere können Gutta, wie Chicle, Percha, Malaya, Jelutong, Leche di Caspi, Niger, Kautschuk, wie Latex, Sheets oder ähnliches verwendet werden.

Als Elastomer-Lösungsmittel können Harze wie Mastix, Colophonium, Benzoeharz, Dammarharz, Glycerin- und Pentaaerythritester der Harzsäuren, Cumaron-Inden-Harze, sowie Glycerinester von Gummi, Harz oder Holz sowie ähnliche verwendet werden.

Als Füllstoffe werden Calciumcarbonat, Magnesiumcarbonat, Aluminium-, Calcium- und Magnesiumsilikat, Titandioxid, Cellulose, Aluminiumoxid oder Kieselsäure sowie deren Kombinationen und ähnliche Stoffe verwendet.

Als Weichmacher kommen Paraffin- und Synthetik-Wachse, Lecithin, Glycerinmonostearat, hydrierte und teilweise hydrierte Pflanzenöle, deren Kombinationen oder ähnliches in Betracht.

Als Verdickungsmittel können Alginsäure, Alginate, Agar-Agar, Guarmehl, verdickende Cellulosederivate, Gummi arabicum, Lecithine, Monoglyceride, Parafinwachse, Glycerintriacetate, Glycerinmonostearate, tierische Fette, Glycerinmonolaurate, Kokosnußöle deren Gemische oder ähnliches verwendet werden.

Die erfindungsgemäßen Kaugummis enthalten zudem, vorzugsweise in einer Menge von 0 bis 3 Gew.-%, bezogen auf das Gesamtgewicht des Kaugummis, Geschmacks-oder Aromastoffe, wie beispielsweise Pfefferminzöle, ätherische Öle verschiedener Geschmacksrichtungen, Fruchtessenzen oder synthetische Aromastoffe, lebensmittelverträgliche Säuren wie Zitronensäure, Ascorbinsäure, Weinsäure, Äpfelsäure, Fumarsäure oder Kombinationen davon. Zusätzlich kann vorgesehen sein, dem Kaugummi Puffersubstanzen wie Natriumcitrat oder Kaliumphosphat zuzusetzen.

In einer besonders bevorzugten Ausführungsform enthalten die erfindungsgemäßen Kaugummis pharmazeutisch aktive Wirkstoffe. Die hohe Lagerstabilität und das verbesserte Löslichkeitsverhalten der erfindungsgemäßen Kaugummis macht diese besonders geeignet, pharmazeutisch aktive Substanzen also Substanzen, die der Prophylaxe oder Therapie von Krankheitsbildem oder Mangelzuständen dienen, in den Mund- und Rachenraum des Verbrauchers zu bringen und dort freizusetzen. Erfindungsgemäß werden Substanzen wie Eukalyphtus, Menthol, Ascorbinsäure, Vitamine, Mineralstoffe, Nicotin, Coffein, Enzyme, Coenzyme, Antibiotika, Zahnsubstanz-härtende oder -schützende Substanzen wie Fluoride, fungizide Wirkstoffe, antibakterielle Wirkstoffe, Kombinationen davon oder ähnliches verwendet. Die vorgenannten pharmazeutisch aktiven Wirkstoffe sind in einer physiologisch wirksamen Menge einzusetzen, das heißt in einer Menge, die zu dem erwünschten physiologischen Effekt im Körper führt. Erfindungsgemäß kann durch eine Variation der Verhältnisse von 1,6-GPS, 1,1-GPS und 1,1-GPM zueinander das Löslichkeitsverhalten der wasserlöslichen Substanzen des Kaugummis variiert werden, und damit eine den unterschiedlichen Anforderungen und Rahmenbedingungen der Arzneimittelverabreichung angepaßte Wirkstofffreigabe erreicht werden. Eine Erhöhung des 1,6-GPS-Gehaltes bewirkt eine Erhöhung der Löslichkeit. Dadurch kann die Wirkstofffreigabe beschleunigt werden. Eine Erhöhung des 1,1-GPM-Gehaltes führt dagegen zu einer Verringerung der Löslichkeit. Dadurch kann die Wirkstofffreigabe verzögert werden und über einen längeren Zeitraum andauemd stattfinden. Eine Erhöhung des 1,1-GPS-Gehaltes führt zu einer weiter gesteigerten Löslichkeit. Dadurch kann eine besonders schnelle Wirkstofffreigabe erzielt werden. Die weichmachende Eigenschaft des Süßungsmittelgemisches im Kaugummi erlaubt außerdem eine schonendere Verarbeitung bei niedrigeren Temperaturen, so daß auch besonders thermolabile Wirk- oder Aromastoffe in die Kaugummis eingearbeitet werden können. Selbstverständlich ist die erfindungsgemäß ermöglichte, verbesserte Wirkstofffreigabe und -einlagerung im Kaugummi nicht auf diese Substanzen beschränkt, sondern betrifft auch andere Substanzen, beispielsweise Geschmacksstoffe.

In einer weiteren Ausführungsform der Erfindung enthält das erfindungsgemäße Kaugummi zusätzliche Süßstoffe in einer Menge von 0 bis 5 Gew.-%, vorzugsweise 0,01 bis 3 Gew.-%, besonders bevorzugt 0,01 bis 1 Gew.-%, bezogen auf das Gesamtgewicht des Kaugummis. Erfindungsgemäß können insbesondere Intensiv-Süßstoffe wie Acesulfam-K, Cyclamat, Aspartam, Glycyrrhizin, Dihydrochalcone, zum Beispiel Neohesperidin Dihydrochalcon, Stevioside, Saccharin, Alitame, Sucralose, Mischungen von diesen oder ähnliche eingesetzt werden.

In einer weiteren Ausführungsform der Erfindung ist vorgesehen, den Kaugummis Zuckeralkohole, vorzugsweise 0,5 bis 65 Gew.-%, bezogen auf das Gesamtgewicht des Kaugummis, zuzusetzen. Als Zuckeralkohole kommen Sorbit, Mannit, Xylit, Maltit, Laktit, Erythrit, Hydrierte Stärke Hydrolysate (HSH), Gemische davon oder ähnliches in Betracht. Da die genannten Zuckeralkohole unter Umständen zu einer unerwünschten Wasseraufnahme führen, sollten sie vorzugsweise nur in einer solchen Menge eingesetzt werden, daß die mögliche Wasseraufnahme in einem akzeptablen Rahmen bleibt. Dies gilt auch für das gegebenenfalls in einer Menge von 0 bis 15 Gew.-%, bezogen auf das Gesamtgewicht des Kaugummis, einsetzbare Glycerin. Dementsprechend müssen hohe Glycerin-oder Zuckeralkohol-Konzentrationen durch erhöhte Mengen am erfindungsgemäß zu verwendenden, in vorteilhafter Weise nicht-hygroskopischen Süßungsmittelgemisch kompensiert werden.

Schließlich kann vorgesehen werden, dem Kaugummi Farbstoffe, beispielsweise β-Karotin oder ähnliches, zuzusetzen.

Die erfindungsgemäßen Kaugummis können in Form von Kissen, Streifen, gefüllten und ungefüllten Einlagen sowie Pellets vorliegen.

Eine weitere Ausführungsform der Erfindung betrifft die erfindungsgemäßen Kaugummis, wobei diese jedoch eine dragierte Oberfläche aufweisen. Die besonders vorteilhafte Zusammensetzung der Kaugummis ermöglicht nämlich eine verbesserte Struktur und Oberfläche der Kaugummis, so daß sich diese besonders leicht und kostengünstig beschichten lassen. Die Beschichtung kann mit einem Süßungsmittelgemisch aus 1,6-GPS, 1,1-GPS und 1,1-GPM in unterschiedlichster Zusammensetzung, einem nahezu äquimolaren Gemisch aus 1,6-GPS und 1,1-GPM, Sorbit, Mannit, Xylit, Dextrose, Saccharose, Kombinationen davon oder ähnlichem erfolgen. Die Kaugummis können auch mit Polymeren, beispielsweise Hydroxypropyl-, Hydroxyethyl-, Methyl- oder Ethylcellulose, beschichtet werden.

Schließlich sieht die Erfindung auch vor, daß in den erfindungsgemäßen Kaugummis neben dem Süßungsmittelgemisch aus 1,6-GPS, 1,1-GPS und 1,1-GPM auch andere Süßungsmittel wie Saccharose, hydrierte Oligosaccharide, Dextrose, Laktose, Maltose, Fruktose oder Invertzucker, sowie andere körpergebende Füllstoffe, wie Polydextrose oder Inulin, enthalten sein können.

Die Herstellung der erfindungsgemäßen Kaugummis kann auf herkömmlichem Weg durch Erwärmen und Kneten der Kaugummigrundmasse und anschließendes Zugeben von Süßungsmittel und weiteren Zutaten geschehen. Die erfindungsgemäßen Kaugummis können jedoch auch hergestellt werden, indem die getrockneten Substanzen mit Kaugummigrundmasse und anderen Zutaten vermischt werden.

Die folgenden Beispiele und die Figur beschreiben die Erfindung näher.

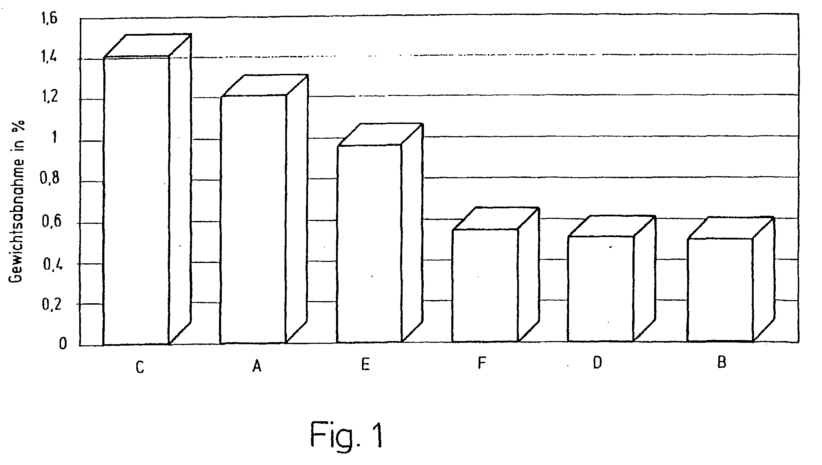

Die Figur 1 stellt in graphischer Form die Gewichtsabnahme von erfindungsgemäßen und bekannten Kaugummis in einem Lagerungstest dar.

### Beispiel 1:

Herstellung eines Kaugummi-Streifens enthaltend ein Süßungsmittelgemisch aus 1,6-GPS, 1,1-GPS und 1,1-GPM.

### Rezeptur

| | |
|---|---|
| Kaugummigrundmasse Nostic TWA | 1,50 kg |
| | |
| Süßungsmittelgemisch enthaltend 1,6-GPS, 1,1-GPS und 1,1-GPM (37 Gew.-% 1,6-GPS, 2 Gew.-% 1,1-GPS, 54 Gew.-% 1,1-GPM, bezogen auf das Gewicht des Süßungsmittelgemisches) | 2,50 kg |
| | |
| Sorbitsirup (70% TS) | 0,60 kg |
| | |
| Glycerin | 0,15 kg |
| Menthol | 0,15 kg |
| Aroma (Spearmint) | 0,10 kg |
| Aspartam | 2,5 g |
| Acesulfam K | 2,5 g |

### Herstellung

Die Kaugummigrundmasse wird in einem Wärmeschrank bei Temperaturen von 50°C bis 55°C erwärmt, bevor sie in den Kneter gegeben wird. Anschließend wird die Kaugummigrundmasse 1 bis 2 Min geknetet. Während des Knetens wird zuerst eine erste Hälfte des Süßungsmittelgemisches eingearbeitet, dann Sorbitsirup, dann die zweite Hälfte des Süßungsmittelsgemisches, anschließend Glycerin hinzugegeben und schließlich Aroma, Menthol und Süßstoff. Die Masse wird geknetet, bis sie homogen ist (Endtemperatur ca. 45°C). Die Masse wird aus dem Kneter genommen und in ca. 1 kg schwere Portionen geteilt. Die portionierte Kaugummimasse wird ca. 15 bis 20 Min auf einer Talkum-bestreuten Unterlage zwischengelagert, mit einem geeigneten Extruder extrudiert und wie üblich weiterverarbeitet.

Der weitgehende Ersatz des leicht löslichen Zuckeralkohols Sorbit und der vollständige Ersatz des ebenfalls leicht löslichen Maltit führt durch die vergleichsweise (im Vergleich zu Zucker) geringere Löslichkeit der Zuckeralkohole 1,6-GPS, 1,1-GPS und 1,1-GPM zu einem sogenannten "Long-Lasting"-Effekt(Geschmacksverstärkung). Das Produkt ist aufgrund seiner zuckerfreien Zusammensetzung auch für Diabetiker geeignet.

### Beispiel 2:

### Herstellung

Herstellung eines Kaugummi-Kissens, enthaltend ein Süßungsmittelgemisch aus 1,6-GPS, 1,1-GPS und 1,1-GPM.

### Rezeptur

| | |
|---|---|
| Kaugummigrundmasse Nostic TWA | 1,20 kg |
| Süßungsmittelgemisch, enthaltend 1,6-GPS, 1,1-GPS und 1,1-GPM (37 Gew.-% 1,6-GPS, 2 Gew.-% 1,1-GPS, 54 Gew.-% 1,1-GPM, bezogen auf das Gewicht des Süßungsmitteigemisches) | 3,00 kg |
| Glycerin . | 0,60 kg |
| Saccharin | 2,50 g |
| Geschmacksstoff (Pfefferminze) | 0,10 kg |

### Herstellung

Die Herstellung wurde analog Ausführungsbeispiel 1 durchgeführt. Man erhält ein zuckertreies, Diabetikergeeignetes Kaugummi mit erhöhter Lagerfähigkeit und vorteilhaftem Lösungsverhalten.

Der Ersatz von Sorbit sowie Sorbitsirup beziehungsweise Maltitsirup in üblichen Rezepturen führt durch die vergleichsweise (im Vergleich zu Zucker) geringere Löslichkeit der Zuckeralkohole 1,1-GPS, 1,6-GPS und 1,1-GPM zu einem sogenannten "Long-Lasting"-Effekt (Geschmacksverstärkung).

### Lagerungstest mit Kaugummis

In einem 14-tägigen Lagerungstest bei 20° C und 40 % relativer Luftfeuchte wurden Kaugummis auf ihren Wasserverlust, der sich in einer Gewichtsabnahme darstellt, untersucht. Die erfindungsgemäßen Kaugummis wurden gemäß der Rezeptur nach Beispiel 1 (B) und gemäß der Rezeptur nach Beispiel 2 (D) hergestellt. Zum Vergleich wurden Kaugummis bekannter Zusammensetzung hergestellt. Kaugummis, die hydrierte Isomaltulose (Isomalt^{R}) enthielten (A und C), wurden analog Beispiel 1 und Beispiel 2 hergestellt (Beispiel 1: 2,5 kg äquimolares Gemisch aus 1,6-GPS und 1,1-GPM, A; Beispiel 2: 3 kg äquimolares Gemisch aus 1,6-GPS und 1,1-GPM, C). Zudem wurden zukkerhaltige Kaugummis (E und F) hergestellt (gemäß Beispiel 1: 2,5 kg Saccharose, E; gemäß Beispiel 2: 3,3 kg Saccharose, 0,3 kg Glycerin, F). Abgesehen von den angegebenen Rezepturänderungen wurden die Rezepturen gemäß der Beispiele 1 und 2 vollständig übernommen.

Der Lagerungstest über 14 Tage bei 20° C und 40 % relativer Luftfeuchtigkeit zeigt eindeutig (Figur 1), daß die erfindungsgemäßen Kaugummis (D, B) die geringste Gewichtsabnahme und damit den geringsten Feuchtigkeitsverlust aufweisen. Die erfindungsgemäßen Kaugummis zeigen also eine gegenüber Isomalt^{R}- oder Zucker-aufweisenden Kaugummis erhöhte Flexibilität auf. 1,1-GPS hat also einen weichmachenden Effekt sowie eine kristallisationshemmende Wirkung auf die Kaugummis, die weniger zum Austrocknen neigen und eine flexiblere Struktur aufweisen. Es zeigt sich in vorteilhafter Weise, daß die 1,1-GPS-aufweisenden Kaugummis unabhängig von deren konkreten Rezepturen (Beispiel 1, Beispiel 2) den gewünschten Effekt aufweisen, das heißt, nicht zum Austrocknen neigen.

### Beispiel 4:

### Sensorik

Eine sensorische Verkostung von erfindungsgemäßen und bekannten Kaugummis wurde vorgenommen. Die Verkostung wurde mit 10 Probanden mittels paarweiser Unterschiedsprüfung durchgeführt. Die Tabellen 1 und 2 verdeutlichen das Ergebnis dieser Verkostung, wobei die Bezeichnungen A, B, C, D, E, F in Beispiel 4 für Kaugummis mit der in Beispiel 3 aufgezeigten Zusammensetzung stehen.

### Kauverhalten zu Beginn des Kauens:

**Tabelle I**

| **Probenbezeichnung** | **Härte** | **Aromaintensität** | **Süßeintensität** | **Gesamteindruck** |
|---|---|---|---|---|
| A | 2,7 | 4,8 | -2,7 | 2,4 |
| B | 2,4 | 3,0 | -1,8 | 3,4 |
| C | 1,3 | 2,5 | -2,2 | 2,7 |
| D | 2,8 | 2,3 | 1,0 | 3,8 |
| E | 5,7 | 3,5 | 2,2 | 3,2 |
| F | 5,5 | 4,7 | 3,1 | 2,7 |

### Kauverhalten nach 5 Minuten:

**Tabelle II**

| **Probenbezeichnung** | **Elastizität** | **Härte** | **Aromaintensität** | **Süßeintensität** | **Gesamteindruck** |
|---|---|---|---|---|---|
| A | 3,8 | 4,5 | 3,7 | 4,2 | 2,4 |
| B | 4,0 | 4,3 | 3,2 | -2,7 | 3,4 |
| C | 3,5 | 4,5 | 2,7 | -2,8 | 2,7 |
| D | 4,3 | 3,5 | 2,8 | -3,0 | 3,8 |
| E | 4,8 | 4,8 | 4,0 | -1,3 | 3,2 |
| F | 4,7 | 4,8 | 3,3 | 1,5 | 2,7 |

Im folgenden ist die Bedeutung der numerischen Wertung angegeben:

| | |
|---|---|
| Elastizität | **1** (unelastisch)-**6** (elastisch) |
| Härte | **1** (hart)-**6** (weich) |
| Aromaintensität | **1** (wenig)-**6** (viel) |
| Süßeintensität | **6** (zu süß)-**1** (optimal)--6 (zu wenig süß) |
| Gesamteindruck | **1** (schlecht)-**6** (gut) |

Es zeigt sich, daß die erfindungsgemäßen 1,1-GPS-aufweisenden Rezepturen B und D zu Beginn des Kauens den besten Gesamteindruck hinterlassen, was unter anderem auf die Süßeintensität zurückzuführen ist.

Auch beim Kauverhalten nach 5 Minuten zeigt sich, daß der Gesamteindruck, den die erfindungsgemäßen Rezepturen B und D hinterlassen, vergleichsweise am besten ist.

## Patentansprüche

1. Zuckerfreies Kaugummi, enthaltend ein Süßungsmittelgemisch aus 10 bis 50 Gew.-% 1,6-GPS (6-O-α-D-Glucopyranosyl-D-sorbit), 2 bis 20 Gew.-% 1,1-GPS (1-O-α-D-Glucopyranosyl-D-sorbit) und 30 bis 70 Gew.-% 1,1-GPM (1-O-α-D-Glucopyranosyl-D-mannit). bezogen auf das Gewicht des Süßungsmittelgemisches, wobei das Süßungsmittelgemisch als feste Trockensubstanz in einer Menge von 30 bis 60 Gew.-%, bezogen auf das Gesamtgewicht des Kaugummis, enthalten ist.

2. Kaugummi nach Anspruch 1, enthaltend zusätzlich einen Zuckeralkohol, insbesondere Mannit, Sorbit, Xylit und/oder Polydextrose, Inulin oder Mischungen davon.

3. Kaugummi nach einem der Ansprüche 1 oder 2, enthaltend zusätzlich einen pharmazeutisch aktiven Wirkstoff, insbesondere Nicotin, Coffein, ein Antibiotikum, ein Fluorid, ein Vitamin, ein Coenzym, ein Mineral oder ein Fungizid.

4. Kaugummi nach einem der Ansprüche 1 bis 3, enthaltend zusätzlich einen Intensivsüßstoff, insbesondere Acesulfam K, Saccharin, Cyclamat, Alitam, Sucralose oder Aspartam.

5. Kaugummi nach einem der Ansprüche 1 bis 4, enthaltend ein Süßungsmittelgemisch in einer Menge von 30 bis 60 Gew.-%, einen Intensivsüßstoff in einer Menge von 0 bis 3 Gew.-%, einen Geschmacksstoff in einer Menge von 0 bis 3 Gew.-%, eine Kaugummigrundmasse in einer Menge innerhalb von 10 bis 75 Gew.-%, einen zuckeralkohol in einer Menge von 0 bis 65 Gew.-%, Glycerin in einer Menge von 0 bis 15 Gew.-% und einen pharmazeutisch aktiven Wirkstoff in einer Menge von 0 bis 3,0 Gew.-%, insbesondere von 0 bis 0,5 Gew.-%, bezogen auf das Gesamtgewicht des Kaugummis.

6. Kaugummi nach einem der Ansprüche 1 bis 5, dessen Oberfläche dragiert ist, insbesondere mit Sorbit, Maltit, Xylit, einem nahezu äquimolaren Gemisch aus 1,6-GPS und 1,1-GPM oder einem 1,6-GPS, 1,1-GPS, 1,1-GPS und 1,1-GPM enthaltenden Süßungsmittelgemisch.

7. Verwendung eines Süßungsmittelgemisches in Form von fester Trockensubstanz aus 10 bis 50 Gew.-% 1,6-GPS, 2 bis 20 Gew.-% 1,1-GPS und 30 bis 70 Gew.-% 1,1-GPM, bezogen auf das Gewicht des Süßungsmittelgemisches, in einem zuckerfreien Kaugummi in einer Menge von 30 bis 60 Gew.-%, bezogen auf das Gesamtgewicht des Kaugummis zur Gefügeverbesserung, als Weichmacher und zur Verbesserung der Aroma- und/oder Wirkstofffreigabe.

## Claims

1. A sugar-free chewing gum, containing a sweetener mixture comprising 10% to 50% by weight of 1,6 GPS (6-O-α-D-glucopyranosyl-D-sorbitol), 2% to 20% by weight of 1,1-GPS (1-O-α-D-glucopyranosyl-D-sorbitol) and 30% to 70% by weight of 1,1-GPM (1-O-α-D-glucopyranosyl-D-mannitol) based on the weight of the sweetener mixture, wherein the sweetener mixture is contained as a solid dry substance in an amount of 30% to 60% by weight, based on the overall weight of the chewing gum.

2. A chewing gum according to claim 1, additionally containing a sugar alcohol, in particular mannitol, sorbitol, xylitol and/or polydextrose, inulin or mixtures thereof.

3. A chewing gum according to one of the claims 1 or 2, additionally containing a pharmaceutically active ingredient, in particular nicotine, caffeine, an antibiotic, a fluoride, a vitamin, a coenzyme, a mineral or a fungicide.

4. A chewing gum according to any one of claims 1 to 3, additionally containing an intense sweetener, in particular acesulfame K, saccharin, cyclamate, alitame, sucralose or aspartame.

5. A chewing gum according to any one of claims 1 to 4, containing a sweetener mixture in an amount of 30% to 60% by weight, an intense sweetener in an amount of 0% to 3% by weight, a flavouring in an amount of 0% to 3% by weight, a chewing gum base in an amount within 10% to 75% by weight, a sugar alcohol in an amount of 0% to 65% by weight, glycerine in an amount of 0% to 15% by weight and a pharmaceutically active ingredient in an amount of 0% to 3.0% by weight, in particular 0% to 0.5% by weight, based on the overall weight of the chewing gum.

6. A chewing gum according to any one of claims 1 to 5, the surface of which is sugar-coated, in particular with sorbitol, maltitol, xylitol, a virtually equimolar mixture comprising 1,6-GPS and 1,1-GPM or a sweetener mixture comprising 1,6-GPS, 1,1-GPS, 1,1 GPS and 1,1-GPM.

7. Use of a sweetener mixture in the form of a solid dry substance, containing 10% to 50% by weight 1,6-GPS, 2% to 20% my weight 1,1-GPS and 30% to 70% by weight 1,1-GPM based on the weight of the sweetener mixture in a sugar-free chewing gum in an amount of 30% to 60% by weight based on the overall weight of the chewing gum, for improving the structure, as a softener and for improving the release of flavour and/or active ingredient.

## Revendications

1. Chewing-gum sans sucre, contenant un mélange d'édulcorants qui contient 10 à 50 % en masse de 1,6-GPS (6-O- α-D-glucopyranosyl-D-sorbitol), 2 à 20 % en masse de 1,1-GPS (1-O- α-D-glucopyranosyl-D-soribol) et 30 à 70 % en masse de 1,1-GPM (1-O- α-D-glucopyranosyl-D-mannitol), sur la base de la masse du mélange d'édulcorants du 1,1-GPS (1-O-α-D-glucopyranosyl-D-sorbitol), dans lequel la mélange d'édulcorants est présent en tant que substance sèche solide dans une quantité de 30 à 60 % en masse, sur la base de la masse totale du chewing-gum.

2. Chewing-gum selon la revendication 1, contenant en outre un sucre-alcool, en particulier du mannitol, du sorbitol, du xylitol et/ou du polydextrose, de l'inuline ou des mélanges de ceux-ci.

3. Chewing-gum selon l'une des revendications 1 à 2, contenant en outre une substance active sur le plan pharmaceutique, en particulier de la nicotine, de la caféine, un antibiotique, un fluorure, une vitamine, une coenzyme, un minéral ou un fongicide.

4. Chewing-gum selon l'une des revendications 1 à 3, contenant en outre un édulcorant intense, en particulier de l'acétosulpham K, de la saccharine, du cyclamate, de l'alitame, du sucralose ou de l'aspartame.

5. Chewing-gum selon l'une des revendications 1 à 4, contenant un mélange d'édulcorants dans une quantité de 30 à 60 % en masse, un édulcorant intense dans une quantité de 0 à 3 % en masse, un agent de sapidité dans une quantité de 0 à 3 % en masse, une matrice de chewing-gum dans une quantité comprise entre 10 et 75 % en masse, un sucre-alcool dans une quantité de 0 à 65 % en masse, de la glycérine dans une quantité de 0 à 15 % en masse et une substance active sur le plan pharmaceutique dans une quantité de 0 à 3,0 % en masse, en particulier de 0 à 0,5 % en masse, sur la base de la masse totale du chewing-gum.

6. Chewing-gum selon l'une des revendications 1 à 5, dont la surface est dragéfiée, en particulier avec du sorbitol, du maititol, du xylitol, un mélange quasi-équimolaire mixture de 1,6-GPS et de 1,1-GPM ou un mélange d'édulcorants contenant du 1,6-GPS, du 1,1-GPS, du 1,1-GPS et du 1,1-GPM.

7. Utilisation d'un mélange d'édulcorants en forme d'un substance sèche solide composé de 10 à 50 % en masse 1,6-GPS, de 2 à 20 % en masse 1,1-GPS et de 30 à 70 % en masse, sur la base de la masse du mélange d'édulcorants dans un chewing-gum sans sucre, dans une quantité de 30 à 60 % en masse, sur la base de la masse totale du chewing-gum, pour améliorer sa texture, en tant que plastifiant, et pour améliorer la libération des arômes et/ou de la substance active.
